# EUROPÄISCHE PATENTSCHRIFT

(11) **EP 1 141 091 B1**
(45) Veröffentlichungstag und Bekanntmachung des Hinweises auf die Patenterteilung: **14.08.2002**
(21) Anmeldenummer: 00902588.3
(22) Anmeldetag: 13.01.2000
(51) Int. Cl.: C08G 69/18, C08G 69/20

(54) **VERWENDUNG VON HETEROGENKATALYSATOREN IN VERFAHREN ZUR HERSTELLUNG VON POLYAMIDEN**
USE OF HETEROGENEOUS CATALYSTS IN METHODS FOR THE PRODUCTION OF POLYAMIDES
UTILISATION DE CATALYSEURS HETEROGENES DANS DES PROCEDES DE PRODUCTION DE POLYAMIDES

(30) Priorität: 13.01.1999 DE 19901013
(43) Veröffentlichungstag der Anmeldung: 10.10.2001
(73) Patentinhaber: BASF AKTIENGESELLSCHAFT, 67056 Ludwigshafen (DE)
(72) Erfinder: MOHRSCHLADT, Ralf, D-68723 Schwetzingen (DE); HILDEBRANDT, Volker, D-68169 Mannheim (DE)
(74) Vertreter: Isenbruck, Günter, Dr.
(86) Internationale Anmeldenummer: EP0000235
(87) Internationale Veröffentlichungsnummer: WO0042090

(56) Entgegenhaltungen:
- EP-A- 0 000 397
- EP-A- 0 005 466
- EP-A- 0 462 476
- WO-A-97/08223
- DE-A- 2 443 566
- DE-A- 19 808 190

## Beschreibung

Die Erfindung betrifft die Verwendung von Metalloxiden als Heterogen-Katalysatoren in einem Verfahren zur Herstellung von Polyamiden durch Polymerisation von Lactamen.

Polyamide auf der Basis von ε-Caprolactam werden zur Herstellung von Fasern, Folien und Formteilen verwendet. Die hydrolytische Polymerisation von ε-Caprolactam, die zu den wichtigsten Verfahren zur Herstellung von Polyamid 6 gehört, verläuft jedoch nur unvollständig. Das Rohpolymerisat aus Caprolactam weist deshalb einen hohen Gehalt an ε-Caprolactam und niedermolekularen Reaktionsprodukten (Oligomeren) auf. Da sowohl die Oligomere als auch das Caprolactam in Wasser löslich und extrahierbar sind, wird der Gehalt an niedermolekularen Bestandteilen auch als Extraktgehalt bezeichnet.

Um eine Beeinträchtigung der Produktqualität und der Verarbeitungseigenschaften zum Beispiel während des Spritzguss- und des Extrusionsverfahrens oder während der Verspinnung auszuschließen, ist eine Verringerung des Extraktgehaltes notwendig.

Üblicherweise erfolgt die hierzu erforderliche sogenannte Extraktion mit Hilfe von Wasser bei erhöhten Temperaturen, wie zum Beispiel in DE-A 2 501 348 beschrieben.

Um die Ausbeute der Polymerisation zu erhöhen und um eine Umweltbelastung zu vermeiden, werden wässrige Extraktlösungen nicht als Abfall beseitigt, sondern wiederverwertet. Dazu werden sie zum Beispiel aufkonzentriert oder extrahiert, um enthaltenes Caprolactam in die Polymerisation zurückführen zu können.

Nicht zuletzt aufgrund der geringeren Löslichkeit von im Granulat enthaltenen Oligomeren und insbesondere von Dimeren müssen aufwendige Verfahrensschritte zur Extraktion mit hohem Energiebedarf eingesetzt werden, um Polyamide mit zufriedenstellender Qualität zu erhalten. In diesem Zusammenhang wurden Verfahren gefunden, bei denen Caprolactam bei der Extraktion von Polyamid 6 als Lösungsvermittler gegenüber den Oligomeren des Lactams eingesetzt wird. In DE-A-43 24 616 wird deshalb vorgeschlagen, dem Extraktionswasser zu Beginn der Extraktion monomeres Caprolactam zuzusetzen.

Bekannt sind auch Verfahren, bei denen der Extraktgehalt durch Verdampfung der Monomere und Oligomere aus dem Polymer verringert wird. In der DE-A-29 48 865 wird ein Verfahren zur Entmonomerisierung angegeben, bei dem das Polymer in geschmolzenem Zustand und in Form dünner Schichten einem Vakuum unterworfen wird.

Sämtliche genannten Verfahren haben den Nachteil, daß zum Teil mehrstufige, kosten- und energieaufwendige Verfahrensschritte zur Entmonomerisierung und zur Aufarbeitung der Extraktionswässer notwendig sind.

Vorteilhaft ist daher die Herstellung von Polyamiden, die schon im unextrahierten Zustand einen abgesenkten Extraktgehalt und insbesondere Dimergehalt aufweisen, so daß der technische und der wirtschaftliche Aufwand zur Extraktion der niedermolekularen Bestandteile und zur Aufarbeitung der Extraktwässer verringert werden kann.

Die Aufgabe, die der vorliegenden Erfindung zugrunde liegt, ist dementsprechend die Herstellung von Polyamid, bei dem die Entstehung von Dimeren und höheren

Oligomeren und der Verbleib von Monomeren in Polymeren eingeschränkt ist und die hergestellten Polyamide somit schon vor einer Extraktionsstufe einen geringen Extraktgehalt aufweisen.

Die Aufgabe wird erfindungsgemäß gelöst durch Verwendung von Metalloxiden als Heterogen-Katalysatoren in einem Verfahren zur Herstellung von Polyamiden durch Polymerisation von Lactamen und gegebenenfalls weiteren polyamidbildenden Monomeren, bei dem die Metalloxide in einer Form eingesetzt werden, die die mechanische Abtrennung aus dem Reaktionsgemisch erlaubt, und im Verlauf oder nach Ende der Polymerisation aus dem Reaktionsgemisch entfernt werden, und die Polymerisation in zwei Stufen erfolgt, wobei in der ersten Stufe unter einem erhöhten Druck gearbeitet wird, bei dem das Reaktionsgemisch mit Ausnahme des Heterogenkatalysators einphasig-flüssig vorliegt, und in der letzten Stufe unter einem Druck im Bereich von 0,01 bis 10 x 10⁵ Pa nachkondensiert wird, wobei der Heterogenkatalysator in einer oder beiden Stufen vorliegt zur Verringerung des Gehaltes an extrahierbaren Verbindungen im erhaltenen Polyamid.

Ein ähnliches Verfahren ist in der prioritätsälteren, nicht vorveröffentlichten DE-A-198 08 190 beschrieben.

Zur Ausführung des erfindungsgemäßen Verfahrens zur Herstellung von extraktarmen Polyamiden werden ε-Caprolactam und gegebenenfalls andere polyamidbildende Monomere in Gegenwart von Metalloxiden, die nicht im Reaktionsgemisch verbleiben, bevorzugt kontinuierlich umgesetzt. Überraschenderweise gelingt mit dem Verfahren eine starke Verringerung des Gehalts an Dimeren, deren Extraktion aufgrund ihres Löslichkeitsverhaltens in Wasser besonders schwierig ist.

Der Vorteil der vorliegenden Erfindung besteht darin, daß die Gesamtmenge an niedermolekularen Bestandteilen und insbesondere an Dimeren, die im anschließenden Extraktionsprozess vom Polymer abgetrennt werden müssen, vermindert wird. Hierdurch wird nicht nur die Verweildauer im Extraktor verkürzt und somit die Raum-Zeit-Ausbeute erhöht, sondern auch die aufzuarbeitende oder zu entsorgende Extraktmenge verringert. Insbesondere der Anfall von Dimeren, wie auch Trimeren und Tetrameren kann vermindert werden, die bei der Abtrennung und Wiederverwendung kritischer sind als Monomere. Zudem können die Umsetzungszeiten vermindert werden.

Erfindungsgemäß wird eine wässrige Lactamlösung, die gegebenenfalls zusätzlich andere polyamidbildende Monomere enthält, mit einem Wassergehalt von 0,05 bis 20 Gew.-%, bevorzugt von 1 bis 10 Gew.-% und besonders bevorzugt mit einem Wassergehalt von 2 bis 6 Gew.-% diskontinuierlich oder bevorzugt kontinuierlich bei Temperaturen im Bereich von 180 bis 290°C in der (schmelze-)flüssigen Phase umgesetzt. Gewünschtenfalls werden die Monomere vor dem Einleiten in die nachfolgenden Reaktionsstufen in einem Ansatzkessel aufgeschmolzen und mit Wasser vermischt.

Als Metalloxid können bekannte Metalloxide wie Zirkonoxid, Aluminiumoxid, Magnesiumoxid, Ceroxid, Lanthanoxid und bevorzugt Titanoxide wie auch Beta-Zeolithe und Schichtsilikate eingesetzt werden. Es wurde gefunden, daß auch Kieselgel und dotierte Metalloxide, wobei zum Beispiel Ruthenium, Kupfer oder Fluorid zur Dotierung eingesetzt werden, den Extraktgehalt deutlich verringern können. Bevorzugt werden Metalloxide eingesetzt, die Broensted-sauer sind. Besonders bevorzugt ist Titandioxid in der sogenannten Anatas-Modifikation. Der Anatasanteil beträgt vorzugsweise mindestens 70, besonders bevorzugt mindestens 90 %, insbesondere 100 %. Erfindungsgemäß weisen die Metalloxid-Körper eine Form und Größe auf, die eine mechanische Abtrennung der Polymerschmelze vom Katalysator, beispielsweise durch Siebe und Filter, ermöglicht. Vorgeschlagen wird der Katalysatoreinsatz in Strang-Granulat-Form oder als Beschichtung auf Füllkörpern.

In einer anderen Ausführungsform wird das Lactam mit homogen gelösten sauren Cokatalysatoren oder einem Gemisch aus verschiedenen katalytisch wirkenden Verbindungen in Gegenwart der oben genannten Heterogenkatalysatoren umgesetzt. Als Cokatalysatoren werden hierbei bevorzugt saure Katalysatoren, ausgewählt aus organischen Mono- oder Dicarbonsäuren, anorganischen Säuren, deren Salzen oder Gemischen davon, wie die oben genannten Carbonsäuren, Terephthalsäure, Adipinsäure, Propionsäure und Isophthalsäure, oder sauerstoffhaltige Phosphorverbindungen, insbesondere Phosphorsäure, phosphorige Säure, hypophosphorige Säure, deren Alkalimetall- und Erdalkalimetallsalze und Ammoniumsalze, oder sauerstoffhaltige Schwefelverbindungen, insbesondere Schwefelsäure und schwefelige Säure eingesetzt.

### Zweistufiges Verfahren

Die Polymerisation wird in zwei Reaktionsstufen durchgeführt, wobei in der ersten Stufe unter einem erhöhten Druck gearbeitet wird und in der zweiten Stufe die Abtrennung einer Gasphase, die Kondensationsprodukte wie Wasser enthält, erfolgt. Die Metalloxid-Körper können erfindungsgemäß in allen Stufen, jedoch besonders bevorzugt in der ersten Stufe eingesetzt werden.

### Stufe 1

Der Druck in der ersten Verfahrensstufe wird so eingestellt, daß das Reaktionsgemisch einphasig-flüssig vorliegt. Die Reaktionsmischung hat eine Massetemperatur von allgemein 180°C bis 290°C, vorzugsweise von 190°C bis 250°C und besonders bevorzugt von 200°C bis 230°C. Die Verweildauer beträgt allgemein 10 min bis 10 Stunden, bevorzugt 0,5 bis 8 Stunden und besonders bevorzugt 1 bis 4 Stunden.

### Stufe 2

In der zweiten Stufe wird der Druck so gewählt, daß eine flüssige Phase, welche das Polymer enthält, und eine gasförmige Phase vorliegen. Der Druck liegt hier im Bereich zwischen 0,01 und 10 x 10⁵ Pa. Die Massetemperatur der Reaktionsmischung beträgt allgemein 220°C bis 290°C, bevorzugt 230°C bis 270°C und besonders bevorzugt 240°C bis 260°C bei Einsatz eines Katalysators.

Die Abtrennung der Gasphase kann durch den Einsatz von gerührten oder ungerührten Abscheidekesseln oder Kesselkaskaden sowie durch den Einsatz von Verdampferapparaten erfolgen, zum Beispiel durch Umlaufverdampfer oder Dünnschichtverdampfer, wie durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des weiteren kann die Abtrennung der Gasphase durch die Zugabe von Wasserdampf oder Inertgas in die flüssige Phase gefördert werden. Wird in der zweiten Stufe ebenfalls ein heterogener Katalysator eingesetzt, so liegt dieser bevorzugt als Schüttung - in diesem Fall sollte auf den Einbau von dynamischen Mischelementen verzichtet werden - oder als Beschichtung von Reaktor-Einbauten vor. Ist der Polymerisationsgrad ausreichend, so kann die erhaltene Polymerschmelze aus der zweiten Stufe beispielsweise mit Hilfe einer Zahnradpumpe ausgetragen, in einem Wasserbad abgekühlt und in anschließenden, dem Fachmann bekannten Verfahrensschritten, zum Beispiel durch Extrusion, Extraktion, Pigmentierung, Temperung usw. weiterverarbeitet werden.

Die Verweildauer in Reaktionsstufe 2 hängt vom Wassergehalt der Mischung, von der Reaktionstemperatur und dem Reaktordruck sowie vom gewünschten Polymerisationsgrad des Produktes am Ende der Reaktionszeit ab. Sie beträgt allgemein zwischen 0,1 und 15 Stunden, bevorzugt zwischen 0,5 und 8 Stunden und besonders bevorzugt zwischen 1 und 4 Stunden. Die Massetemperatur der Reaktionsmischung beträgt allgemein 230°C bis 300°C, bevorzugt 240°C bis 280°C und besonders bevorzugt 250°C bis 270°C ohne Einsatz eines Katalysators.

Im Rahmen des erfindungsgemäßen Verfahrens kann auch eine Kettenverlängerung oder eine Verzweigung oder eine Kombination aus beiden durchgeführt werden. Dazu werden bekannte Substanzen zur Verzweigung oder zur Kettenverlängerung von Polymeren dem Reaktionsgemisch zugesetzt. Die Substanzen können sowohl dem Ausgangsgemisch als auch dem Reaktionsgemisch, welches nachkondensiert wird, zugesetzt werden. Als einsetzbare Substanzen sind zu nennen:

Trifunktionelle Amine oder Carbonsäuren als Verzweiger bzw. Vernetzer. Beispiele geeigneter mindestens trifunktioneller Amine oder Carbonsäuren sind in der EP-A-0 345 648 beschrieben. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigte Aminogruppen auf. Beispiele geeigneter Carbonsäuren sind Trimesinsäure, trimerisierte Fettsäuren, die beispiels-weise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂-N(CH₂)ₓ-N((CH₂)ₙ-NR₂)₂ (I)

in der
R H oder -(CH₂)ₙ-NR¹ ₂ mit
R¹ H oder -(CH₂)ₙ-NR² ₂ mit
R² H oder -(CH₂)ₙ-NR³ ₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3,5,3'5'-Biphenyltetracarbonsäure-Phthalocyanin, Naphthalocyanin, 3,5,5',5'-Biphenyltetracarbonsäure, 1,3,5,7--Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-43 12 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besonders bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden Aminen oder Carbonsäuren. Geringe Mengen an mindestens trifunktionellen Aminen können jedoch in den trifunktionellen Carbonsäuren enthalten sein und umgekehrt.

Die Substanzen liegen in der Menge von 1 bis 50 µmol/g Polyamid, vorzugsweise 1 bis 35, besonders bevorzugt 1 bis 20 µmol/g Polyamid vor. Vorzugsweise sind die Substanzen in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Difünktionelle Carbonsäuren oder difünktionelle Amine dienen als Kettenverlängerungsmittel. Sie weisen 2 Carbonsäuregruppen auf, die mit Aminogruppen umgesetzt werden können oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin und Laromin. Verzweigte aliphatische Diamine sind ebenfalls verwendbar, ein Beispiel ist Vestamin TMD (Trimethyl-hexamethylendiamin, hergestellt von der Hüls AG). Die gesamten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunktionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Der Reaktionsmischung können Zusatz- und Füllstoffe, aliphatische und aromatische Kettenregler wie mono- und bifunktionelle Amine und Säure sowie Substanzen zur Hitze-, Photostabilisierung und zur Verbesserung der Anfärbbarkeit des Polymers zugesetzt werden. Bevorzugt werden die Stoffe, die nicht homogen in der Reaktionsmischung gelöst sind, wie Pigmente und Füllstoffe, der Reaktionsmischung nach den Herstellungsphasen, die in Gegenwart des Festbettkatalysators ablaufen, zugeführt.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnaceoder Gasruß eingesetzt wird (siehe hierzu G Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. mit Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Femer sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentration bis zu 1 Gew.-%, bezogen auf das Gewicht der Mischung, einsetzbar. Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Die erfindungsgemäß erhaltenen Polyamide, insbesondere Polyamid 6 und dessen Copolymere, kann man zur Herstellung von Fasern bzw. Flächengebilden und Werkstoffen verwenden. Entsprechende Verfahren sind beispielsweise in EP-A-0 462 476 beschrieben.

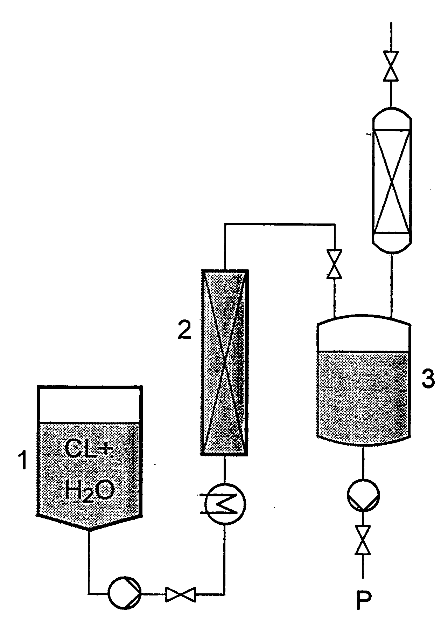

In einer bevorzugten Ausführungsform kann man den Gehalt an niedermolekularen Bestandteilen wie Caprolactam, linearen und cyclischen Oligomeren im erfindungsgemäß hergestellten Polyamid reduzieren, indem man das Polyamid zuerst mit einer wäßrigen Lösung von Caprolactam und anschließend mit Wasser extrahiert und/oder der Gasphasenextraktion unterwirft.
Die Zeichnung zeigt in Fig. 1 schematisch eine Vorrichtung zur Durchführung des Verfahrens. Darin bedeuten:
- CL:: Caprolactam
- 1:: Vorlagetank
- 2:: Rohrreaktor
- 3:: Abscheider
- P:: Polyamid

Die Erfindung wird nachstehend durch Beispiele näher erläutert.

### Beispiele

Die Ausführungsbeispiele wurden mit einer zweistufigen Apparatur realisiert (siehe Figur 1). Diese war zusammengesetzt aus einem Vorlagetank (1), einem Rohrreaktor (2), der die Katalysatorschüttung enthielt, und einem Abscheider (3) zur anschließenden Kondensation des PA-Präpolymers. Die Reaktionsmischung wurde mit Hilfe einer HPLC-Kolbenpumpe durch einen Wärmetauscher in den Rohr- bzw. Vorreaktor (1 Liter ohne TiO₂-Schüttung) gepumpt und anschließend im Abscheider (2 Liter) bei geringen Drücken polykondensiert und sodann ausgetragen. Um einen ausreichenden Austausch der Reaktanden mit der Katalysatoroberfläche zu gewährleisten, war der Druck im Vorreaktor so gewählt, daß die Reaktionsmischung einphasig-flüssig vorlag. Die Umsetzungen wurden in kurzer Zeit, das heißt 4 Stunden, beendet, wobei hohe Umsätze erzielt wurden.

Die Produkte wurden granuliert, extrahiert und bezüglich Viskosität und Extraktgehalt analysiert. Die Verfahrensparameter und die korrespondierenden Viskositäts- und Extraktwerte sind in der Tabelle 1 zusammengefasst.

### Analytik

Die relative Viskosität (RV) der extrahierten Produkte als Maß für den Molekulargewichtsaufbau und Polymerisationsgrad wurde in 1 Gew.-%iger Lösung in 96 %iger Schwefelsäure bei 25°C mittels Viskosimeter nach Ubbelohde bestimmt.

Die Polyamidproben wurden mit siedendem Wasser für eine Dauer von 32 bzw. 16 Stunden unter Rückfluss extrahiert. Der Trockenrückstand im Extraktwasser, dessen Einwaage dem Gesamtextraktgehalt im Polymer entspricht, wurde mittels HPLC-Analytik analysiert.

Als Katalysator diente ein strangförmiges Granulat, hergestellt aus Titandioxid von Finnti, Typ S150, mit einem Durchmesser von 4 mm und einer Länge zwischen 5 und 20 mm. Das Titandioxid des S150-Katalysators lag in der Anatas-Modifikation vor.

Insbesondere bei Verwendung eines Wassergehaltes der Eduktmischung von 2 - 2,5 Gew.-% werden Extrakte mit sehr geringem Dimergehalt und geringem Trimer- und Tetramergehalt erhalten.

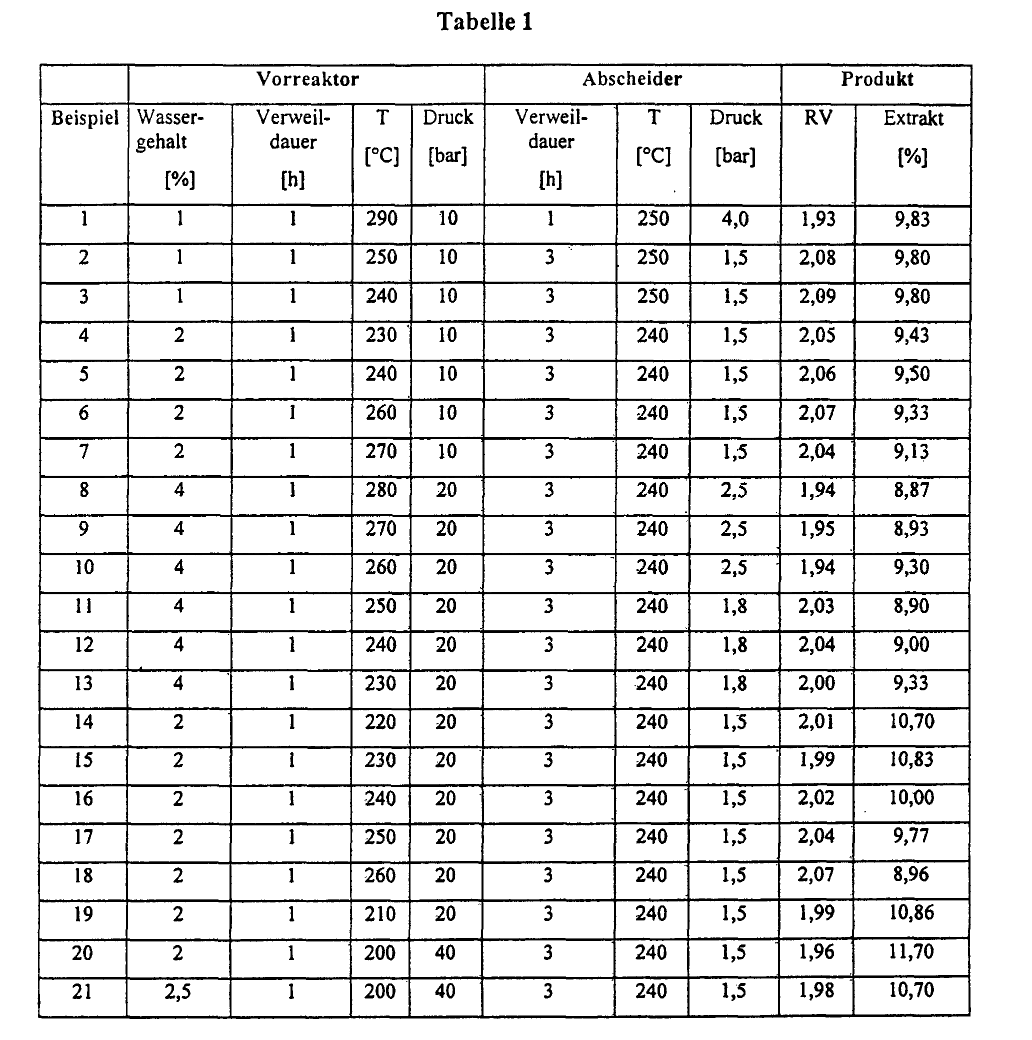

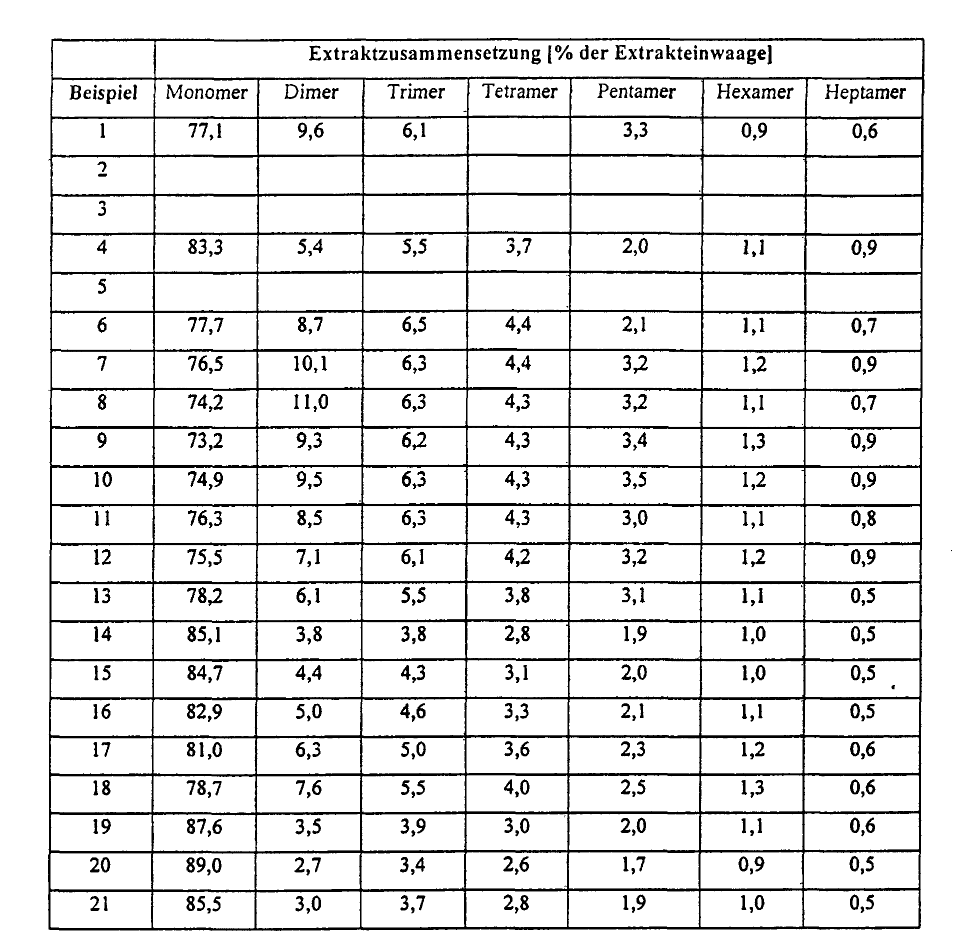

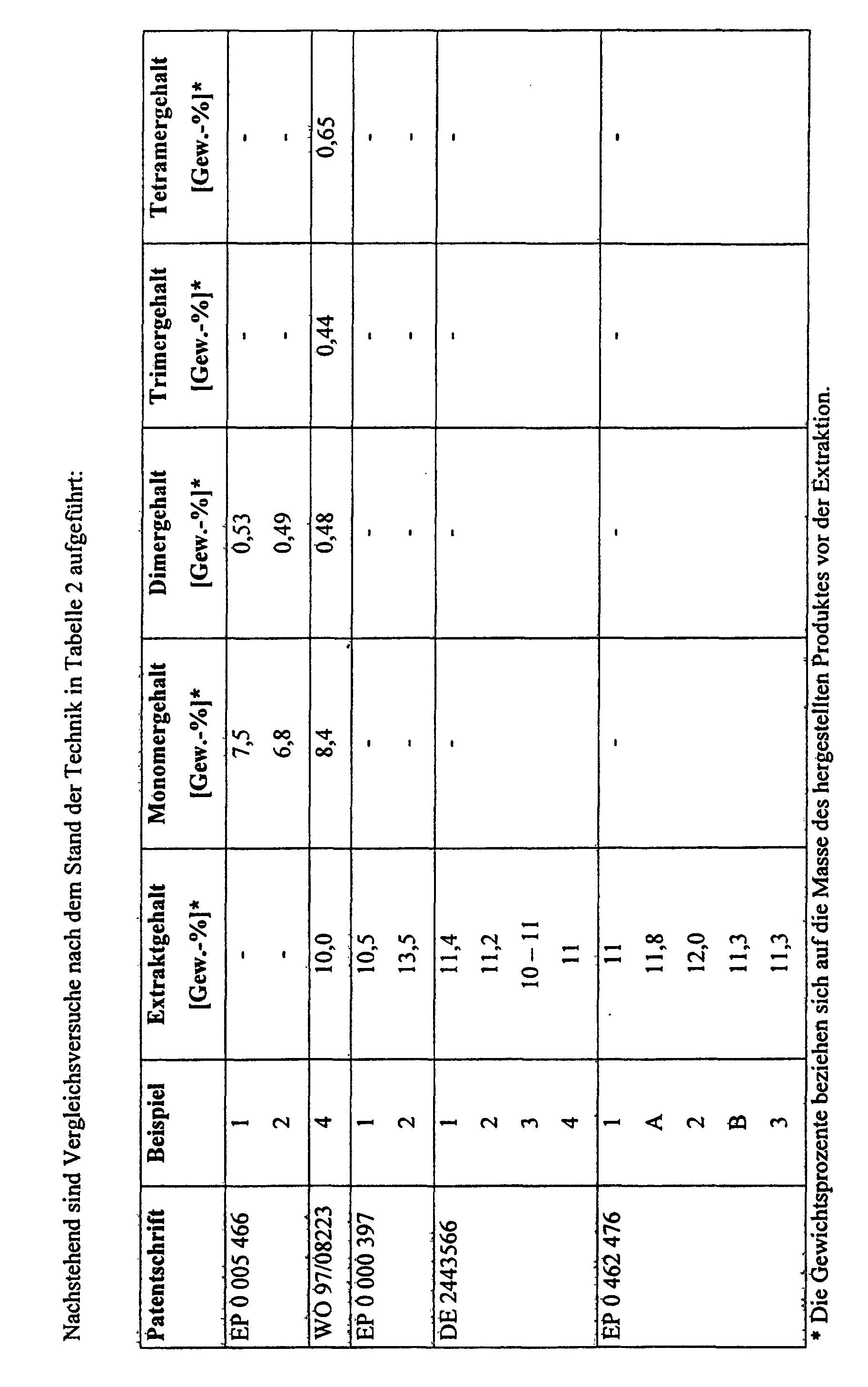

## Patentansprüche

1. Verwendung von Metalloxiden als Heterogen-Katalystoren in einem Verfahren zur Herstellung von Polyamiden durch Polymerisation von Lactamen und gegebenenfalls weiteren polyamidbildenden Monomeren, bei dem die Metalloxide in einer Form eingesetzt werden, die die mechanische Abtrennung aus dem Reaktionsgemisch erlaubt, und im Verlauf oder nach Ende der Polymerisation aus dem Reaktionsgemisch entfernt werden, und die Polymerisation in zwei Stufen erfolgt, wobei in der ersten Stufe unter einem erhöhten Druck gearbeitet wird, bei dem das Reaktionsgemisch mit Ausnahme des Heterogenkatalysators einphasig-flüssig vorliegt, und in der letzten Stufe unter einem Druck im Bereich von 0,01 bis 10 x 10⁵ Pa nachkondensiert wird, wobei der Heterogenkatalysator in einer oder beiden Stufen vorliegt, zur Verringerung des Gehaltes an extrahierbaren Verbindungen im erhaltenen Polyamid.

2. Verwendung nach Anspruch 1, **dadurch gekennzeichnet, daß** die Metalloxid-Katalysatoren in Form von Granulaten, Strängen, Festbetten oder mit Katalysator beschichteten Füllkörpern oder Einbauten eingesetzt werden.

3. Verwendung nach Anspruch 1 oder 2, **dadurch gekennzeichnet, daß** die Metalloxid-Katalysatoren ausgewählt sind aus Zirkonoxid, Aluminiumoxid, Magnesiumoxid, Ceroxid, Lanthanoxid, Titanoxid, Beta-Zeolithen und Schichtsilikaten.

4. Verwendung nach Anspruch 3, **dadurch gekennzeichnet, daß** als Metalloxid-Katalysator Titanoxid eingesetzt wird, das zu mindestens 70 Gew.-% in der Anatasmodifikation vorliegt.

5. Verwendung nach einem der Ansprüche 1 bis 4, **dadurch gekennzeichnet, daß** die Metalloxid-Katalysatoren zusammen mit im Reaktionsgemisch homogen gelösten sauren Cokatalysatoren eingesetzt werden.

6. Verwendung nach Anspruch 5, **dadurch gekennzeichnet, daß** die sauren Cokatalysatoren ausgewählt sind aus organischen Mono- und Dicarbonsäuren, anorganischen Säuren, deren Salzen oder Gemischen davon.

7. Verwendung nach einem der Ansprüche 1 bis 6, **dadurch gekennzeichnet, daß** die Polymerisation der Lactame in Gegenwart von organischen Monocarbonsäuren, Dicarbonsäuren oder deren Gemischen als Kettenreglern und/oder Cokatalysatoren durchgeführt wird.

8. Verwendung nach Anspruch 1, **dadurch gekennzeichnet, daß** die Umsetzung in Gegenwart des Heterogen-Katalysators bei einer Temperatur im Bereich von 180 bis 290°C und bei Abwesenheit des Heterogen-Katalysators bei einer Temperatur im Bereich von 230 bis 300°C durchgefuhrt wird.

9. Verwendung nach einem der Ansprüche 1 bis 8, **dadurch gekennzeichnet, daß** die Umsetzung in Gegenwart von weniger als 10 Gew.-% Wasser, bezogen auf das gesamte Reaktionsgemisch, durchgeführt wird.

## Claims

1. The use of metal oxides as heterogeneous catalysts in a process for producing polyamides by polymerization of lactams and optionally further polyamide-forming monomers wherein the metal oxides are used in a form which permits mechanical removal from the reaction mixture and are removed from the reaction mixture during or after the polymerization the polymerization is effected in two stages, the first stage being carried out under an elevated pressure at which the reaction mixture with the exception of the heterogeneous catalyst forms a single liquid phase and the last stage being a postcondensation under pressure within the range from 0.01 to 10 × 10⁵ Pa, wherein the heterogeneous catalyst is present in either or both stages, for reducing the extractables content of the polyamide obtained.

2. The use of claim 1, **characterized in that** the metal oxide catalysts are used in the form of chips, extrudates, fixed beds or catalyst-coated packing elements or internal fitments.

3. The use of claim 1 or 2, **characterized in that** the metal oxide catalysts are selected from the group consisting of zirconium oxide, aluminum oxide, magnesium oxide, cerium oxide, lanthanum oxide, titanium oxide, beta-zeolites and sheet-silicates.

4. The use of claim 3, **characterized in that** the metal oxide catalyst used is titanium oxide which is at least 70% by weight present in the anatase form.

5. The use of any of claims 1 to 4, **characterized in that** the metal oxide catalysts are used together with acidic cocatalysts homogeneously dissolved in the reaction mixture.

6. The use of claim 5, **characterized in that** the acidic cocatalysts are selected from the group consisting of organic mono- and dicarboxylic acids, inorganic acids, their salts or mixtures thereof.

7. The use of any of claims 1 to 6, **characterized in that** the polymerization of the lactams is carried out in the presence of organic monocarboxylic acids, dicarboxylic acids or mixtures thereof as chain regulators and/or cocatalysts.

8. The use of claim 1, **characterized in that** the reaction is carried out at from 180 to 290°C when the heterogeneous catalyst is present and at from 230 to 300°C when the heterogeneous catalyst is absent.

9. The use of any of claims 1 to 8, **characterized in that** the reaction is carried out in the presence of less than 10% by weight of water, based on the total reaction mixture.

## Revendications

1. Utilisation d'oxydes métalliques comme catalyseurs hétérogènes dans un procédé de préparation de polyamides par polymérisation de lactames et éventuellement d'autres monomères générateurs de polyamide, dans laquelle les oxydes métalliques sont mis en oeuvre sous une forme qui permet la séparation mécanique à partir du mélange réactionnel, et sont éliminés du mélange réactionnel au cours ou à la fin de la polymérisation, et dans laquelle la polymérisation a lieu en deux étapes, dans lesquelles, dans la première étape, on opère à une pression élevée à laquelle le mélange réactionnel se présente sous forme liquide monophasique à l'exception du catalyseur hétérogène et, dans la deuxième étape, on effectue une post-condensation sous une pression de l'ordre de 0,01 à 10 x 10⁵ Pa, le catalyseur hétérogène étant présent dans une étape ou dans les deux, pour diminuer la teneur en composés extractibles dans le polyamide obtenu.

2. Utilisation suivant la revendication 1, **caractérisée en ce que** les catalyseurs à base d'oxyde métallique sont mis en oeuvre sous la forme de produits de granulation, d'extrudés, de lits fixes ou de corps de remplissage ou inserts enduits de catalyseur.

3. Utilisation suivant l'une des revendications 1 et 2, **caractérisée en ce que** les catalyseurs à base d'oxyde métallique sont choisis parmi de l'oxyde de zirconium, de l'oxyde d'aluminium, de l'oxyde de magnésium, de l'oxyde de cérium, de l'oxyde de lanthane, de l'oxyde de titane, des zéolites bêta et des silicates lamellaires.

4. Utilisation suivant la revendication 3, **caractérisée en ce que**, comme catalyseur à base d'oxyde métallique, on met en oeuvre de l'oxyde de titane qui se présente dans la modification anatase pour au moins 70% en poids.

5. Utilisation suivant l'une des revendications 1 à 4, **caractérisé en ce que** les catalyseurs à base d'oxyde métallique sont mis en oeuvre conjointement à des cocatalyseurs acides, dissous de manière homogène dans le mélange réactionnel.

6. Utilisation suivant la revendication 5, **caractérisée en ce que** les cocatalyseurs acides sont choisis parmi des acides monocarboxyliques et dicarboxyliques organiques, des acides inorganiques, leurs sels ou leurs mélanges.

7. Utilisation suivant une des revendications 1 à 6, **caractérisée en ce que** la polymérisation des lactames est effectuée en présence d'acides monocarboxyliques ou dicarboxyliques organiques ou de leurs mélanges, comme régulateurs de chaîne et/ou cocatalyseurs.

8. Utilisation suivant la revendication 1, **caractérisée en ce que** la réaction est effectuée en présence du catalyseur hétérogène à une température de l'ordre de 180 à 290°C et en l'absence du catalyseur hétérogène à une température de l'ordre de 230 à 300°C.

9. Utilisation suivant l'une des revendications 1 à 8, **caractérisée en ce que** la réaction est effectuée en présence de moins de 10% en poids d'eau, par rapport à la totalité du mélange réactionnel.
